# EUROPÄISCHE PATENTANMELDUNG

(11) **EP 1 004 383 A1**
(43) Veröffentlichungstag der Anmeldung: **31.05.2000**
(21) Anmeldenummer: 98811162.1
(22) Anmeldetag: 25.11.1998
(51) Int. Cl.: B23D 57/00

(54) **Drahtführungsrolle für Drahtsäge mit Temperiereinrichtung**

(71) Anmelder: Meyer & Burger AG, 3613 Steffisburg (CH)
(72) Erfinder: Stähli, Ulrich, 3603 Thun (CH)
(74) Vertreter: AMMANN PATENTANWAELTE AG BERN

(57) **Zusammenfassung**

In einer Drahtführungsrolle (1) für Drahtsägen, insbesondere für das Zerteilen von Halbleiterrohlingen in eine Anzahl Scheiben für die Herstellung von elektronischen Bauelementen, werden an der Oberfläche des Kerns (17) mindestens ein, bevorzugt zwei Kühlkanäle vorgesehen, die jeweils den Fluss eines Temperiermittels über die ganze Länge des Rollenkörpers (8) und nahe der Oberfläche im wesentlichen gleichförmig abdeckend erlauben. Durch die grosse Nähe zu den eigentlichen Drahtführungen im aussen gelegenen Drahtführungsmantel (20) ergibt sich eine enge thermische Kupplung zwischen Temperierflüssigkeit und den Drahtführungen und damit eine genauere Temperierungsmöglichkeit der gesamten Drahtführungsrolle (1). Zusätzlich kann die Temperierung dadurch verbessert werden, dass die Temperierflüssigkeit auch nahe den Lagern (4 bis 7) der Drahtführungsrolle (1) entlang geführt wird und beispielsweise zwei Temperierflüssigkeitsströme in zwei ineinander verschränkten Kanalsystemen (21 bzw. 22) vorgesehen werden.

## Beschreibung

Die vorliegende Erfindung bezieht sich auf Drahtführungsrollen gemäss Oberbegriff des Anspruchs 1.

Drahtsägen werden unter anderem dafür verwendet, Rohlinge aus Halbleitermaterial in eine Anzahl Scheiben zu zerlegen, die dann in weiteren Schritten der Herstellung von Halbleiter-Bauelementen dienen. Für die nachfolgende Verarbeitung der Scheiben ist es wichtig, dass diese eine sehr hohe geometrische Qualität aufweisen. Dadurch entstehen hohe Anforderungen an die Führung der Sägedrähte während des mehrstündigen Sägevorganges. Eine Quelle für Positionsänderungen ist dabei die thermische Ausdehnung der Drahtführungsrollen, die die beim Schneiden auftretende Wärme von den Sägedrähten notwendigerweise zum Teil übernehmen. Eine andere Wärmequelle stellt auch einfach das Umlaufen der Drähte um die Drahtführungsrollen dar. Verschärft wird dieses Problem noch dadurch, dass die Sägegeschwindigkeit und damit die Produktivität der Drahtsägen zu erhöhen angestrebt wird, wobei auch die Wärmeproduktion ansteigt.

Um einer thermischen Grössenänderung der Drahtführungsrollen entgegenzuwirken, wird auch die Temperierung der Drahtführungsrollen vorgeschlagen. Z. B. ist es aus der CH-A-687300 und der EP-A-0552663 bekannt, im Kern der Rolle, das heisst nahe der Drehachse, einen Kühlmittelkreislauf vorzusehen. Eine Variante davon gibt die EP-A-0689891 an: Das Kühlsystem weist darin einen mäanderförmigen oder alternativ spiralförmigen Kühlmittelfluss auf. Es sind zwei getrennte Kühlkreisläufe vorgesehen, die jeweils unabhängig von einander auf je eine Hälfte der Rolle wirken. Das Kühlmittel wird dabei von jedem Ende, das heisst der Lagerung der Rolle her, direkt bis etwa zur Mitte der Rolle geführt und fliesst von dort auf die angegebene Art flächendeckend zu dem Ende zurück, an dem das Kühlmittel eingespeist wird. Charakteristisch für diese Temperiereinrichtung ist, dass die beiden Hälften der Rolle im Prinzip unabhängig voneinander temperiert werden und daher zusätzliche Vorkehrungen getroffen werden müssen, damit keine Temperaturunterschiede zwischen den beiden Rollenhälften auftreten.

Eine Aufgabe der vorliegende Erfindung besteht darin, eine Drahtführungsrolle anzugeben, die gegenüber den bekannten Ausführungen eine wirksamere und/oder vereinfachte Temperiereinrichtung aufweist.

Eine derartige Drahtführungsrolle ist im Anspruch 1 angegeben. Die weiteren Ansprüche geben bevorzugte Ausführungsformen an.

Der Kühlmittelfluss, oder besser Temperiermittelfluss, da neben einer Kühlung auch die Möglichkeit besteht, die Rollen auf einer konstanten, erhöhten Temperatur zu halten, befindet sich also erfindungsgemäss nahe der Oberfläche der Rolle. Dadurch wird eine thermische Abschirmung des Rolleninneren bewirkt, da die Wärme von der Oberfläche abgeleitet wird bzw. dieser zugeführt wird, ohne dass der Kern der Rolle an diesem Wärmefluss beteiligt ist. Durch die Nähe zur Oberfläche ergibt sich auch eine engere termische Kupplung, wodurch eine genauere und schnellere Regelung der Temperatur der Rollenoberfläche möglich wird. Der Temperiermittelfluss in den benachbarten Kanälen ist gegenläufig. Da der Zu- resp. Abfluss der beiden Kanäle auf der gleichen Seite liegen, ist die Temperatur über die ganze Rolle gesehen konstant. Bevorzugt befindet sich auch noch der Sensor zur Messung der Rollentemperatur im Bereich zwischen Temperiermittelfluss und Oberfläche der Rolle, um eine genaue Erfassung der Temperaturverhältnisse zu ermöglichen.

Die bevorzugte Konstruktion der Rolle besteht darin, dass Temperiermittelkanäle in die Oberfläche des Rollenkerns eingearbeitet werden. Um den Rollenkern herum ist nur noch ein relativ dünner Mantel aufgeschrumpft, der die Temperierkanäle abdichtet und auf dem der Kunststoffbelag mit den Drahtführungsrillen aufgebracht ist.

Zur gleichzeitigen Kühlung der Lager der Führungsrolle kann Zu- und/oder Abfluss durch den Lagerbereich in einer dünnen, aber relativ ausgedehnten Zone nahe den Lagern vorbeigeführt werden. Bevorzugt wird dafür der Abfluss des Temperiermittels durch einen entsprechenden Ringkanal in der Welle nach aussen geleitet.

Die Erfindung wird weiter an zwei Ausführungsbeispielen unter Bezugnahme auf Figuren verdeutlicht.
- Figur 1: zeigt einen Längschnitt durch eine Rolle mit zwei Kühlkanalsystemen; und
- Figur 2: zeigt einen Längschnitt durch eine Rolle ähnlich wie Figur 1, bei dem die beiden Kühlsysteme an einem Ende miteinander verbunden sind.

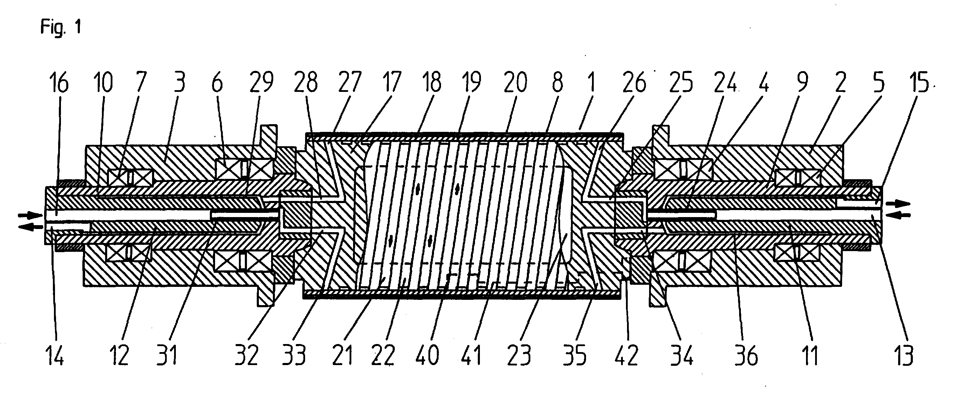

Gemäss Figur 1 ist die Drahtführungsrolle 1 in einer rechten 2 und linken 3 Aufnahme drehbar mittels Wälzlagern 4 bis 7 gehalten. Ausgehend vom Walzenkörper 8 ragen Hohlwellen 9 bzw. 10 in den Bereich der Lager 4 bis 7 hinein. In die Hohlwellen 9, 10 sind die Anschlussbolzen 11, 12 eingesetzt. Die Temperierflüssigkeit wird über die Kanäle 13 bis 16 zuresp. abgeführt.

Der Rollenkörper besteht aus dem Rollenkern 17 und dem darauf aufgezogenen Mantel 18. Der Mantel 18 besteht wiederum aus einer Dichtungslage 19 und der darüber befindlichen Führungslage 20, die die (nicht dargestellten) Führungsrillen für den Sägedraht aufweist. In den Rollenkern 17 sind an der Oberfläche die spiralförmigen Kanäle 21, 22 eingearbeitet. Unter anderem zur Verringerung des Gewichts und auch der Wärmekapazität ist der Rollenkern 17 hohl ausgeführt (Hohlraum 23).

Auf den Rollenkern 17 wird eine Art Hülse mit einer Wandstärke von 1 - 6 mm aufgeschrumpft. Diese Dichtungslage oder Hülse 19, z. B. aus Stahl, dient zur Dichtung der Kanäle und zugleich als Träger für die Kunststoffbeschichtung 20, in die die Führungsrillen eingeschliffen werden.

Der Zufluss für den einen, ersten Temperiermittelkreis erfolgt über den Einlass-Anschluss 13 durch die Zentralbohrung im Bolzen 11, das Verbindungsrohr 24 und schliesslich den Kanal 25 im Rollenkörper 17 in den Anfang 26 des Spiralkanale 21. Am Ende 27 des Spiralkanals 21 wird das Temperiermittel durch den Kanal 28, der sich durch den Rollenkörper 17 hindurch in die Hohlachse 10 erstreckt, in den Ringkanal 29 geführt. Der Ringkanal 29 entsteht im wesentlichen dadurch, dass der Bolzen 12 im Bereich der Lager 6, 7 einen kleineren Durchmesser als der Innendurchmesser der Hohlwelle 10 aufweist.

Der Auslass 14 mündet in das äussere Ende des Hohlraumes 29, so dass das Temperiermittel von der Rolle 8 herkommend grossflächig den Lagerbereich in relativ geringer Nähe zu den Wälzlagen 6, 7 durchströmt und damit auch diese temperiert.

Der zweite Kühlmittelkreis ist spiegelbildlich zum beschriebenen ersten Kühlmittelkreis aufgebaut, beginnend mit Einlass 16, dann Verbindungssrohr 31, Verbindungskanal 32 zum Beginn 33 des Spiralkanals 22, auslassseitigem Kanal 34 mit Mündungen am Ende 35 des Spiralkanals 22 und dem Hohlraum 36 zwischen Bolzen 11 und Hohlwelle 9 und schliesslich dem Auslass 15.

Dadurch, dass der Zu- resp. Abfluss der beiden Kreisläufe auf der gleichen Seite liegen, ist die mittlere Temperatur beider Kreisläufe über die ganze Rolle gleich.

Charakteristisch an dieser Ausführung sind damit zwei Temperiermitteltlüsse, die die ganze Drahtführungsrolle 1 inklusive der Hohlwellen durchströmen und dabei auch gegenseitig Wärme austauschen können, wodurch zusätzlich die Temperierwirkung erhöht wird, insbesondere Temperaturunterschiede zwischen den Walzenenden vermieden werden.

Zur Überwachung der Temperatur der Drahtführungswalze 1 ist ein Temperaturfühler 40 etwa mittig im Rollenkörper 8 nahe der Oberfläche des Rollenkerns 17 und damit auch nahe den Spiralkanälen 21, 22 und insbesondere der Oberfläche des Mantels 18 angeordnet. Die Übertragung der Messsignale erfolgt innerhalb des Rollenkerns über eine Leitung 41 zu einer Sendereinheit 42, die der drahtlosen Übertragung der Messsignale vom Temperaturfühler 40 dient. Die drahtlose Übertragung selbst und damit auch die Ausführung des Senders 42 erfolgt gemäss Stand der Technik und wird daher nicht weiter beschrieben. Angemerkt sei noch, dass der Sender 42 auch noch als Empfangseinheit für eingestrahlte Energie dienen kann, so dass die Kombination aus Temperaturfühler 40 und Sender 42 keine eigene Energiequelle benötigt.

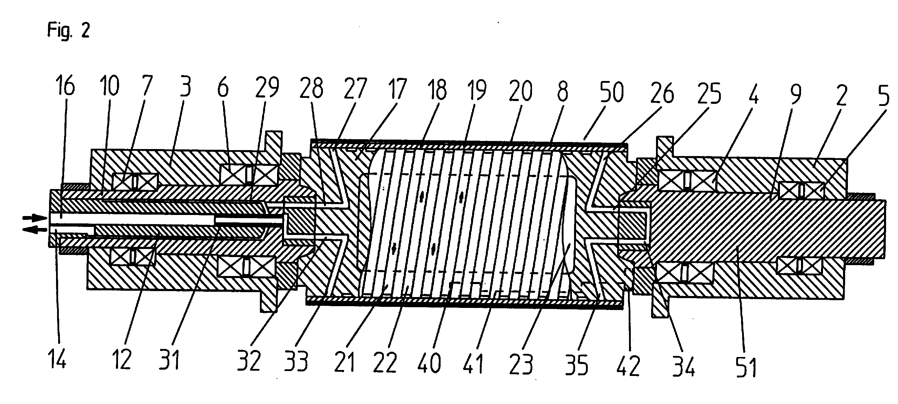

Die in Figur 2 dargestellte Drahtführungsrolle 50 ist in den meisten Merkmalen identisch mit der Drahtführungsrolle 1 aufgebaut und insoweit mit den gleichen Bezugszeichen versehen. Auf eine Beschreibung dieser Übereinstimmungen wird daher verzichtet.

Der Unterschied besteht im wesentlichen darin, dass die Drahtführungsrolle 50 auf der in der Abbildung rechten Seite eine massive Welle 51 aufweist. Die Kanäle 25 und 34 sind direkt miteinander verbunden. Das am Einlass 16 eintretende Temperiermittel durchfliesst also spiralförmig den Spiralkanal 21 in der Figur von links nach rechts, wird dann über die Kanäle 25 und 34 zum Beginn des Kanals 22 geleitet und durchströmt diesen von rechts nach links, wonach es endlich am Auslass 14 wieder austritt. Denkbar ist es in diese Ausführung, statt der massiven Welle 51 eine Konstruktion mit Hohlwelle wie in Figur 1 dargestellt vorzusehen und z. B. Auslass 15 direkt mit Einlass 13 zu verbinden, so dass bei dieser Ausführung die Lager 4 und 5 temperierbar sind. Da in Figur 2 die linke Lagerung und die Drahtführungsrolle selbst gekühlt bzw. temperiert ist und damit keiner thermischen Ausdehnung unterliegt, ist auch die Position der Sägedrähte relativ zueinander wie auch zu der als Bezugspunkt dienenden linksseitigen Lagerung der Drahtführungsrolle konstant. Eine Dimensionsänderung in den rechten Lagern 4 und 5 würde sich also nur in einer Verschiebung dieser Lager selbst äussern, insbesondere in Längsrichtung der Rolle 50, jedoch keinen Einfluss auf die Führungsgenauigkeit der Sägedrähte haben.

Möglich ist es auch, die Lager noch zusätzlich von aussen zu kühlen, so dass auch im innen untemperierten Lager Temperatureinflüssen entgegengewirkt wird.

Im Rahmen der Erfindung sind dem Fachmann weitere Abwandlungen der Ausführungsbeispiele zugänglich, ohne den Bereich der Erfindung zu verlassen. Denkbar ist es z. B. auch, mehr als zwei Spiralkanäle vorzusehen; generell die Strömungsrichtung der Temperierflüssigkeit umzudrehen, so dass die Lager von der Temperierflüssigkeit beim Hineinströmen in die Drahtführungsrolle temperiert werden; die Dichtungslage 19 kann einteilig mit der Führungslage 20 ausgeführt sein; statt Spiralkanälen können auch sich im wesentlichen längs der Rolle erstreckende Kanäle vorgesehen sein, wobei die beiden Leitungssysteme fingerförmig ineinander greifen; zur Erhöhung des Wärmeaustausches zwischen den Temperierflüssigkeitströmen können zusätzlich Verbindungskanäle kleineren Querschnitts über die Länge der Hauptkanäle 21, 22 angeordnet sein, um einen Flüssigkeitsaustausch zu gestatten; es kann mehr als ein Temperaturfühler vorhanden sein, z. B. um noch bestehende Temperaturunterschiede innerhalb der Drahtführungsrolle zu erfassen und durch separate Steuerung der Temperiermittel (Fluss; Temperierung) zu verringern; der Temperatursensor kann noch näher zur Oberfläche der Drahtführungrolle angordnet werden, also so nahe als möglich zur Führungslage 20, um die Temperatur der Oberfläche so genau als möglich zu erfassen.

Ein nicht unwesentlicher Vorteil der Erfindung besteht auch darin, dass das Kühlmittel die Lager 4 bis 7 zwar temperiert, aber diese nicht durchströmt. Die Temperierflüssigkeit muss deshalb keinerlei Schmiereigenschaften aufweisen und kann optimal auf die Temperieraufgabe ausgelegt werden.

## Patentansprüche

1. Drahtführungsrolle (1; 50) für eine Drahtsäge insbesondere zum gleichzeitigen Zersägen von stabförmigen Körpern in eine Mehrzahl von Scheiben, wobei die Drahtführungsrolle einen Kern (17), der bevorzugt einen Hohlraum (23) von mindestens der Hälfte des Volumens des Kerns (17) aufweist, einen den Kern umgebenden Mantel (18) und mindestens ein Temperierkanalsystem (13, 24 - 29, 14; 15, 31 - 36, 16) aufweist, dadurch gekennzeichnet, dass das Temperierkanalsystem in die Oberfläche des Kerns in Form oben offener Temperierkanäle (21, 22) eingearbeitet und durch den Mantel nach oben dicht abgeschlossen ist und mindestens ein wesentlicher Teil eines Temperiermittelflusses durch das Kanalsystem vom einen Ende der Drahtführungsrolle (1) zum anderen Ende der Drahtführungsrolle (1) fliesst, so dass sich ein nahe der Oberfläche der Rolle angeordnetes Temperierkanalsystem mit geringem Wärmewiderstand zur Oberfläche der Rolle und einer gleichmässigen Wirkung über im wesentlichen die ganze Länge der Rolle ergibt.

2. Drahtführungsrolle (1) gemäss Anspruch 1, dadurch gekennzeichnet, dass die Temperierkanäle (21, 22) in Form von Spiralen ausgeführt sind.

3. Drahtführungsrolle (1) gemäss einem der Ansprüche 1 bis 2, dadurch gekennzeichnet, dass die Temperierkanäle (21, 22) in Form von Gittern mit jeweils einer Anzahl, insbesondere mindestens 10 pro Kanalsystem, sich im wesentlichen coaxial zur Drahtführungsrolle (1) erstreckender Kanäle ausgebildet sind.

4. Drahtführungsrolle (1) gemäss einem der Ansprüche 1 bis 3, dadurch gekennzeichnet, dass mindestens zwei Temperierkanäle (21, 22) vorhanden sind, die ineinander verschränkt angeordnet sind, so dass mindestens zwei Temperiermittelflüsse im Gegenstrom durch die Drahtführungsrolle (1) geschickt werden können, wobei ein wirksamer Wärmeaustausch zwischen den Flüssen stattfindet.

5. Drahtführungsrolle (1) gemäss einem der Ansprüche 1 bis 4, dadurch gekennzeichnet, dass die Kanäle mindestens zweier, bevorzugt aller, Temperierkanäle (21, 22) miteinander durch über die Temperierkanäle (21, 22) verteilte Verbindungskanäle verbunden sind, die dem Temperiermittelfluss einen wesentlich höheren Widerstand entgegensetzen als die Kanäle.

6. Drahtführungsrolle (1) gemäss einem der Ansprüche 1 bis 5, dadurch gekennzeichnet, dass jeder Temperierkanal (21, 22) am einen und am anderen Ende je einen ersten und einen zweiten Anschluss (13, 14; 15, 16) aufweist, um Einspeisung und Entnahme des Temperiermittels zu erlauben.

7. Drahtführungsrolle (1) gemäss einem der Ansprüche 1 bis 6, dadurch gekennzeichnet, dass sie beidseitig in Lagern (4, 5, 6, 7), insbesondere Wälzlagern gelagert ist und mindestens ein Temperiermittelzustrom und/oder -ablauf nahe den Lager entlanggeführt ist, so dass auch die Lager durch das Temperiermittel temperierbar sind.

8. Drahtführungsrolle (1) gemäss Anspruch 7, dadurch gekennzeichnet, dass sie an mindestens einem Ende eine Hohlwelle (9, 10) aufweist, die in den Lagern drehbar gehalten ist, und mindestens im Bereich der Lager zwischen Anschlussteil (11, 12) und Hohlwelle ein Hohlraum (29, 36) ausgebildet ist, der von von der Drahtführungsrolle (1) abfliessendem und/oder zur Drahtführungsrolle (1) hinfliessendem Temperiermittel durchströmt wird, um eine Temperierung der Hohlwelle und der Lager zu bewirken.

9. Drahtführungsrolle (1) gemäss einem der Ansprüche 1 bis 8, dadurch gekennzeichnet, dass mindestens ein Temperatursensor (40) nahe der Oberfläche der Drahtführungsrolle, bevorzugt im Bereich von Temperierkanalsystem bis Oberfläche der Drahtführungsrolle angeordnet ist.

10. Drahtführungsrolle gemäss Anspruch 9, dadurch gekennzeichnet, dass der Sensor (40) mit einer Einrichtung (42) zur drahtlosen Datenübertragung verbunden ist, um die Messdaten des Sensors zu übertragen.

11. Verwendung der Drahtführungsrolle (1) gemäss einem der Ansprüche 4 bis 10, dadurch gekennzeichnet, dass Temperiermittel im Gegenstrom durch die Temperierkanäle bewegt wird.
